# EUROPEAN PATENT APPLICATION

(11) **EP 4 241 632 A1**
(43) Date of publication of application: **13.09.2023**
(21) Application number: 21889257.8
(22) Date of filing: 05.11.2021
(51) Int. Cl.: A47J 43/00, A23P 30/00

(54) **FOOD PROCESSING DEVICE**

(30) Priority: 05.11.2020 JP 2020185434
(71) Applicant: Panasonic Intellectual Property Management Co., Ltd., Osaka-shi, Osaka 540-6207 (JP)
(72) Inventor: UKAI, Kunihiro, Osaka-shi, Osaka 540-6207 (JP); HASHIMOTO, Yasuhiro, Osaka-shi, Osaka 540-6207 (JP); INO, Daisuke, Osaka-shi, Osaka 540-6207 (JP)
(74) Representative: Eisenführ Speiser
(86) International application number: PCT/JP2021/040699
(87) International publication number: WO 2022/097705

(57) **Abstract**

A food processing apparatus (100) includes a reaction tank (1) having an internal space (S1) for storing a reactant that is in a liquid state and that is used for food, a cooler (10) that cools a reactant stored in the reaction tank (1), and a catalytic reactor (6) disposed in the internal space S1. The catalytic reactor (6) includes a reaction tube (7) and a light source (8) disposed in the interior of the reaction tube (7). The outer surface of the reaction tube (7) is provided with a photocatalyst. The reaction tube (7) allows light radiated from the light source (8) to pass therethrough. The reaction tube (7) has a first end, and the first end is closed so as to serve as a bottom surface (7c) of the reaction tube (7). The interior of the reaction tube (7) is filled with a dry gas (12).

## Description

### Title of Invention: FOOD PROCESSING APPARATUS

### Technical Field

The present disclosure relates to a food processing apparatus.

### Background Art

PTL 1 discloses a manufacturing method in which a photocatalyst is used in a food production process so as to remove or deactivate microorganisms present in a brewed product at room temperature at which the brewed product is not heated.

### Citation List

### Patent Literature

PTL 1: Japanese Unexamined Patent Application Publication No. 2003-250514

### Summary of Invention

However, there is room for improvement in the device or the manufacturing method disclosed in PTL 1 mentioned above. For example, there is a problem that it is difficult to effectively reform a reactant that is used for food.

An aspect of the present disclosure has been made in view of the above situation, and the present disclosure provides a food processing apparatus capable of effectively reforming a reactant that is used for food.

### Advantageous Effects of Invention

A food processing apparatus according to an aspect of the present disclosure includes a reaction tank that has an internal space for storing a reactant, the reactant being in a liquid state and being to be used for food, a cooler that cools the reactant, which is stored in the reaction tank, and a catalytic reactor that is disposed in the internal space. The catalytic reactor includes a reaction tube and a light source disposed in an interior of the reaction tube. An outer surface of the reaction tube is provided with a photocatalyst. The reaction tube allows light radiated from the light source to pass through the reaction tube. The reaction tube has a first end, and the first end is closed in such a manner as to serve as a bottom surface of the reaction tube. The interior of the reaction tube is filled with a dry gas.

Note that these general or specific aspects may be implemented as a method, a system, an integrated circuit, a computer program, a computer-readable recording medium, or any combination of an apparatus, a method, a system, an integrated circuit, a computer program, and a computer-readable recording medium. An example of the computer-readable recording medium is a non-volatile recording medium such as a compact disc read-only memory (CD-ROM).

A food processing apparatus according to an aspect of the present disclosure can be stably operated and can effectively reform a reactant that is used for food.

### Brief Description of Drawings

[Fig. 1] Fig. 1 is a diagram illustrating an example of a food processing apparatus of an embodiment.
[Fig. 2] Fig. 2 is a diagram illustrating an example of a configuration of a catalytic reactor according to a first embodiment.
[Fig. 3] Fig. 3 is a diagram illustrating an example of a configuration of a catalytic reactor according to a first modification of the first embodiment.
[Fig. 4] Fig. 4 is a diagram illustrating an example of a configuration of a catalytic reactor according to a second modification of the first embodiment.
[Fig. 5] Fig. 5 is a diagram illustrating an example of a configuration of a catalytic reactor according to a third modification of the first embodiment.
[Fig. 6] Fig. 6 is a functional block diagram of a food processing apparatus according to the third modification of the first embodiment.
[Fig. 7] Fig. 7 is a flowchart illustrating an example of an operation of the food processing apparatus according to the third modification of the first embodiment.
[Fig. 8] Fig. 8 is a diagram illustrating an example of a configuration of a catalytic reactor according to a second embodiment.
[Fig. 9] Fig. 9 is a diagram illustrating a first example of a configuration of a catalytic reactor according to a third embodiment.
[Fig. 10] Fig. 10 is a diagram illustrating a second example of the configuration of the catalytic reactor according to the third embodiment.
[Fig. 11] Fig. 11 is a diagram illustrating a third example of the configuration of the catalytic reactor according to the third embodiment.

### Description of Embodiments

### (Underlying Knowledge Forming Basis of the Present Disclosure)

The present inventors have found that the following problems occur with regard to a food producing apparatus or a food producing method mentioned in the "Background Art" section.

In food production, reformation of raw materials of food has been widely practiced for the purpose of improving production efficiency, improving the content of nutritional ingredients, and so forth.

An example of a method for reforming raw materials of food is a method using a catalyst, and for example, there is a method in which a nickel catalyst is used to hydrogenate fat and oil components that are used as raw materials in production of margarine. Using an immobilized enzyme in food production can also be one of the uses of catalysts.

Although it is not from the standpoint of reforming raw materials of food, catalysts may sometimes be used for the purpose of sterilization in production processes, and for example, in PTL 1, studies have been conducted on a production method in which a photocatalyst is used in a food production process so as to remove or deactivate microorganisms present in a brewed product at room temperature at which the brewed product is not heated.

Although a method of the related art using a catalyst is effective in reforming a single-component raw material of food, it is an extension of a chemical engineering method, and thus, there is a limitation on an apparatus configuration. There is room for improvement in the method in order to make it compatible with a configuration suitable for catalysts that are used for multi-purpose development.

An apparatus that is used in a production method of the related art using a photocatalyst is also intended for sterilization, and thus, there is room for improvement in the apparatus in order to make it compatible with a configuration suitable for reforming raw materials of food. For example, in a food processing apparatus that promotes reaction of a reactant, which is in contact with an outer surface of a reaction tube, the outer surface being provided with a photocatalyst, by radiating light onto the photocatalyst from the inside of the reaction tube, it may sometimes be difficult to effectively reform a raw material of food. Especially when the food processing apparatus maintains the reactant at a low temperature, convection of a gas occurs inside the reaction tube due to a difference between the temperature of the reaction tube that is cooled by the low-temperature reactant and the temperature of a light source that generates heat, and there is a possibility that the air outside the reaction tube may be taken into the reaction tube. In the case where the outside air contains a large amount of moisture, the gas taken in the reaction tube is cooled by the reactant outside the reaction tube, so that condensation occurs on the inner surface of the reaction tube. This makes it difficult for light from the light source to reach the outside of the reaction tube, and there is a possibility that an effect of promoting the reaction of the reactant by using the photocatalyst may be reduced.

The present inventors have conceived a food processing apparatus in which an effect of promoting reaction of a reactant by using a photocatalyst is less likely to be reduced.

An aspect of the present disclosure has been made in view of the above situation, and the present disclosure newly provides a food processing apparatus using a photocatalyst that reforms a raw material of food.

A food processing apparatus according to an aspect of the present disclosure includes a reaction tank that has an internal space for storing a reactant, the reactant being in a liquid state and being to be used for food, a cooler that cools the reactant, which is stored in the reaction tank, and a catalytic reactor that is disposed in the internal space. The catalytic reactor includes a reaction tube and a light source disposed in an interior of the reaction tube. An outer surface of the reaction tube is provided with a photocatalyst. The reaction tube allows light radiated from the light source to pass through the reaction tube. The reaction tube has a first end, and the first end is closed in such a manner as to serve as a bottom surface of the reaction tube. The interior of the reaction tube is filled with a dry gas.

According to the above configuration, since the interior of the reaction tube is filled with the dry gas, the humidity inside the reaction tube can be set to be lower than a predetermined humidity. Thus, occurrence of condensation on the inner surface of the reaction tube as a result of the gas being cooled by the inner surface of the reaction tube can be suppressed, and the light source can radiate an amount of light equal to or greater than a predetermined amount of light onto the photocatalyst. As a result, the food processing apparatus can be stably operated, and a reactant that is used for food can be effectively reformed.

The catalytic reactor may have a second end sealed with a sealer, and the second end may face the first end.

As a result, a gas inside the reaction tube can be maintained in a dry state. Thus, occurrence of condensation on the inner surface of the reaction tube as a result of the gas inside the reaction tube being cooled by the inner surface of the reaction tube can be suppressed.

The catalytic reactor may further include a color-changing member that is disposed in the interior of the reaction tube and whose color changes when the color-changing member comes into contact with moisture.

As a result, an operator who operates a food reactor can visually and suitably determine that moisture has entered the interior of the reaction tube. This enables the operator to, for example, take measures against occurrence of condensation, examples of the measures including replacing the reaction tube that is in a condition that makes it difficult for light from the light source to reach the photocatalyst with the reaction tube in which no condensation has occurred. Therefore, even if condensation occurs on the inner surface of the reaction tube, the light source can radiate an amount of light equal to or greater than the predetermined amount of light onto the photocatalyst.

The catalytic reactor may further include a moisture sensor that is disposed in the interior of the reaction tube and that detects moisture.

As a result, the food reactor can appropriately determine entry of moisture into the reaction tube as a physical quantity. Thus, the food reactor can suitably take measures against occurrence of condensation inside the reaction tube.

The food processing apparatus may further include a controller that stops light emission of the light source when moisture is detected by the moisture sensor.

According to this configuration, the food reactor stops light emission of the light source when condensation occurs, and thus, a process for causing the reactant to react can be stopped when an effect of promoting the reaction of the reactant by using the photocatalyst is reduced. Thus, the food reactor can be suppressed from continuously operating in a state where the reaction rate of the reactant is low, and the power consumption of the food reactor can be reduced.

The catalytic reactor may further include a pressure regulator that is disposed at the second end and that adjusts a pressure inside the reaction tube by introducing a gas into the interior of the reaction tube or discharging a gas from the interior of the reaction tube, and the second end may face the first end.

According to this configuration, by providing the pressure regulator that adjusts the pressure inside the reaction tube by introducing a gas into the interior of the reaction tube or discharging a gas from the interior of the reaction tube, an increase in the internal pressure of the reaction tube can be suppressed, and the outside air can be suppressed from being taken into the inside of the reaction tube from a gap that is generated due to structure deformation of a member. As a result, occurrence of condensation on the inner surface of the reaction tube as a result of the outside air taken into the reaction tube being cooled can be suppressed.

The catalytic reactor may further include an introduction tube that allows a dry gas to be introduced into the reaction tube and a discharge tube that allows the dry gas, which has been introduced into the reaction tube through the introduction tube, to be discharged outside the reaction tube.

According to this configuration, the dry gas is introduced into the reaction tube through the introduction tube, and the gas inside the reaction tube is discharged through the discharge tube, so that the state in which the interior of the reaction tube is filled with the dry gas can be effectively maintained.

A distance between the introduction tube and the first end may be shorter than a distance between the introduction tube and the second end. The introduction tube may have an introduction port through which the dry gas is introduced into the reaction tube. A distance between the discharge tube and the second end may be shorter than a distance between the discharge tube and the first end. The discharge tube may have a discharge port through which a gas inside the reaction tube is discharged.

According to this configuration, the introduction port of the introduction tube is located at a position closer to the first end of the reaction tube than the second end, and the discharge port of the discharge tube is located at a position closer to the second end of the reaction tube than the first end, so that the dry gas can be introduced from the first end of the reaction tube, and the gas inside the reaction tube can be discharged from the second end. Thus, in the reaction tube, a flow of the dry gas from the bottom surface toward an opening can be generated, and the interior of the reaction tube can be entirely filled with the dry gas.

The catalytic reactor may further include a rectifier that is disposed near the introduction port of the introduction tube such that a gap is formed between the rectifier and the inner surface of the reaction tube, and the introduction tube may extend through the rectifier.

Thus, the dry gas introduced through the introduction port is rectified by the rectifier in such a manner as to flow near the inner surface of the reaction tube. Thus, occurrence of condensation on the inner surface of the reaction tube can be effectively suppressed.

The light source may include at least one of a fluorescent lamp that emits an ultraviolet ray or a light emitting diode (LED) that emits an ultraviolet ray.

Thus, reaction of the reactant with the photocatalyst can be effectively promoted.

Specific examples of embodiments will be described below with reference to the accompanying drawings.

The specific examples, which will be described below, represent examples of the above-described aspects. Thus, shapes, materials, components, arrangement positions and connection forms of the components, and so forth that will be mentioned below are not intended to limit the above-described aspects unless they are described in the claims. Among the components that will be mentioned below, the components that are not mentioned in the independent claim representing the most generic concept of the present aspect will be described as optional components. Repeated description may sometimes be omitted for the components denoted by the same reference sign in the drawings. The drawings schematically illustrate the components for ease of understanding, and the shapes of some of the components, the dimensional ratios of some of the components, and so forth may sometimes not be accurately illustrated.

### (First Embodiment)

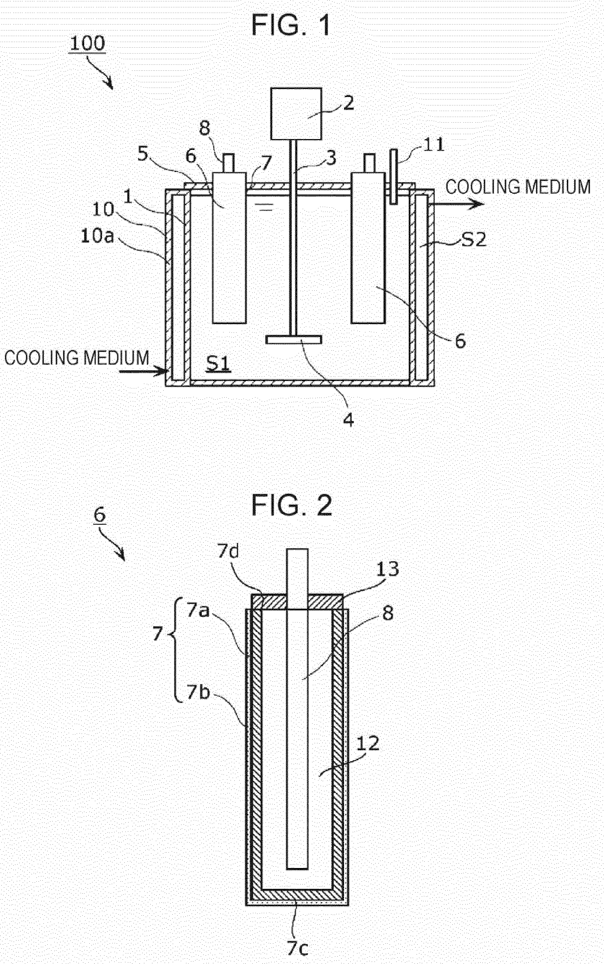

The configuration of a food processing apparatus 100 will now be described with reference to Fig. 1. Fig. 1 is a diagram illustrating an example of the food processing apparatus 100 of the embodiment.

As illustrated in Fig. 1, the food processing apparatus 100 includes a reaction tank 1, a stirrer 2, catalytic reactors 6, a cooler 10, and a reaction-tank temperature sensor 11.

The reaction tank 1 has a first space S1 for storing a reactant that is in a liquid state and that is used for food. The reaction tank 1 is, for example, a circular cylindrical container with a bottom. Note that the reaction tank 1 does not need to have a circular cylindrical shape as long as it is a cylindrical container that has a bottom and the first space S1 for storing the liquid reactant. The reaction tank 1 is provided with a lid 5 that covers an upper opening of the reaction tank 1. The lid 5 is a member having a circular plate-like shape and has through holes through which a rotary shaft 3 of a stirring member 4, the catalytic reactors 6, and the reaction-tank temperature sensor 11 extend.

The stirrer 2 includes the stirring member 4 that stirs the reactant in the reaction tank 1 by rotating. The stirrer 2 is disposed in such a manner that the rotary shaft 3 of the stirrer 2 coincides with the central axis of the circular cylindrical shape of the reaction tank 1. The stirrer 2 includes a motor (not illustrated) that causes the rotary shaft 3 to rotate.

Here, a specific example of the stirring member 4 will be described.

The stirring member 4 may be formed of, for example, an inclined paddle blade. The stirring member 4 may be formed of any one of a propeller blade, a disk turbine blade, and a centrifugal stirring member so as to achieve an optimum processing condition by taking into consideration operation processing conditions such as the viscosity of the reactant and the power consumption of the stirrer 2. Note that, in the case where two or more stirring members 4 are used in the food processing apparatus 100, the stirring members 4 may include at least one of an inclined paddle blade, a propeller blade, a disk turbine blade, and a centrifugal stirring member.

The food processing apparatus 100 includes the catalytic reactors 6. When viewed in the axial direction of the rotary shaft 3 of the stirring member 4, the catalytic reactors 6 (the six catalytic reactors 6 in the present embodiment) are arranged around the rotary shaft 3 of the stirring member 4 in such a manner as to be spaced apart from one another. The outer sides of the six catalytic reactors 6 are surrounded by an inner wall surface of the reaction tank 1. In other words, the catalytic reactors 6 are arranged in the internal space S1 of the reaction tank 1. As a result, when the reactant in the reaction tank 1 is stirred by the stirrer 2, the stirred reactant can move between the catalytic reactors 6.

Here, details of the configuration of each of the catalytic reactors 6 will be described with reference to Fig. 2. Fig. 2 is a diagram illustrating an example of the configuration of each of the catalytic reactors 6 according to the first embodiment.

As illustrated in Fig. 2, each of the catalytic reactors 6 includes a reaction tube 7 and a light source 8. Each of the catalytic reactors 6 may further include a sealer 13 that seals between an opening 7d of the reaction tube 7 and the light source 8, the opening 7d being formed at an end (a second end) of the reaction tube 7 that is located on the side opposite to the side on which a bottom surface 7c of the reaction tube 7 is present. As a result, the reaction tube 7 is airtightly sealed, and the airtightness of the interior of the reaction tube 7 is maintained. The interior of the reaction tube 7 is filled with a dry gas 12.

The reaction tube 7 has an outer surface provided with a photocatalyst and the bottom surface 7c, which is formed by sealing a first end of the reaction tube 7, and allows light to pass therethrough. More specifically, the reaction tube 7 incudes a glass base member 7a having a circular cylindrical shape with a bottom and a photocatalyst thin film 7b provided on an outer surface of the glass base member 7a. The glass base member 7a is disposed such that a cylinder axis direction of the circular cylindrical shape of the glass base member 7a is parallel to the rotary shaft 3 of the stirring member 4.

The photocatalyst thin film 7b provided on the outer surface of the glass base member 7a is formed by, for example, a common sol-gel method. Specifically, the photocatalyst thin film 7b is made of TiO₂. A sol-gel liquid that is used in the method of forming the photocatalyst thin film 7b is applied to the outer surface of the glass base member 7a, and then, the glass base member 7a, to which the sol-gel liquid has been applied, is rotated by using a rotator. As a result, the sol-gel liquid is uniformly applied to the entire outer surface of the glass base member 7a. After the sol-gel liquid applied to the glass base member 7a has been dried, the glass base member 7a is dried in an electric furnace and then heated at a high temperature that is 500°C or higher, so that the photocatalyst thin film 7b is fired on the outer surface of the glass base member 7a.

The light source 8 radiates light onto the photocatalyst from the inside of the reaction tube 7. The light source 8 is inserted into the interior of the glass base member 7a from an open portion that is located on the side opposite to the side on which the bottom surface 7c of the glass base member 7a is present. More specifically, in order to effectively cause an exciton to be generated in the photocatalyst, the light source 8 includes a light source having a center wavelength of about 260 nm to about 400 nm. For example, the light source 8 includes a fluorescent lamp whose center wavelength is within the wavelength range of ultraviolet rays (UV-A), which is 315 nm to 400 nm. Consequently, reaction of the reactant with the photocatalyst can be effectively promoted.

The light source 8 may be disposed in such a manner as to face the thin film 7b provided on the outer surface of the glass base member 7a in order to effectively radiate light onto the thin film 7b provided on the outer surface of the glass base member 7a. Note that the light source 8 may include, for example, a high-pressure mercury lamp, a light emitting diode (LED) that emits ultraviolet rays, or the like. Since an LED has a high luminous efficiency and generates a small amount of heat, the amount of convection that occurs in the reaction tube 7 can be smaller than that in the case of using a light source that generates a large amount of heat, and the outside air can be suppressed from being taken into the reaction tube 7. Similarly, a fluorescent lamp that generates a small amount of heat may be used.

The cooler 10 cools the reactant in the reaction tank 1. The cooler 10 is disposed in such a manner as to surround the outer sides of the catalytic reactors 6. More specifically, the cooler 10 includes an outer wall 10a that surrounds the reaction tank 1 and a cooling medium (refrigerant) that flows through a second space S2 formed between the reaction tank 1 and the outer wall 10a.

The cooler 10 operates on the basis of the temperature measured by the reaction-tank temperature sensor 11 so as to adjust the temperature of the reactant. More specifically, in the case where the reactant having a temperature higher than a first temperature is cooled so as to have the first temperature, the cooler 10 causes the refrigerant having a temperature equal to or lower than the first temperature to flow through the second space S2. As a result, the cooler 10 cools the reactant by causing the refrigerant and the reactant to exchange heat with each other with the reaction tank 1 interposed therebetween. The refrigerant whose temperature has increased by heat exchange with the reactant may be cooled so as to have a temperature equal to or lower than the first temperature by, for example, a heat exchanger (not illustrated) that is disposed outside the second space S2, and the second space S2 and the heat exchanger may be connected to each other by a pipe (not illustrated) such that the refrigerant returns into the second space S2 after being cooled. The refrigerant may be caused to circulate between the second space S2 and the above-mentioned heat exchanger by, for example, a circulating pump or the like (not illustrated). In this case, the cooler 10 may start to cool the reactant by causing the circulating pump to start to operate.

The reaction-tank temperature sensor 11 is disposed in the reaction tank 1 and measures the temperature of the reactant. The reaction-tank temperature sensor 11 is formed of, for example, a thermistor, a thermocouple, or the like. The reaction-tank temperature sensor 11 extends through the lid 5 and is, for example, fixed to the lid 5.

Operation of the food processing apparatus 100 will now be described with reference with Fig. 1 and Fig. 2.

First, in the food processing apparatus 100, a reactant that serves as a raw material of food is put into the reaction tank 1. Next, the food processing apparatus 100 starts a photocatalytic treatment. More specifically, in the photocatalytic treatment, the food processing apparatus 100 turns on the light sources 8 of the catalytic reactors 6 so as to start radiation of light onto the photocatalyst thin films 7b from the interiors of the reaction tubes 7. In the photocatalytic treatment, the food processing apparatus 100 causes the rotary shaft 3 of the stirring member 4 to rotate by driving the motor of the stirrer 2 so as to stir the reactant in the reaction tank 1. In addition, in the photocatalytic treatment, the food processing apparatus 100 supplies the cooling medium to the second space S2 of the cooler 10 by driving the circulating pump of the cooler 10.

In this case, the food processing apparatus 100 measures the temperature of the reactant by using the reaction-tank temperature sensor 11 and adjusts the temperature of the cooling medium that is supplied to the second space S2 and/or the amount of the cooling medium such that the reactant has a predetermined temperature. The food processing apparatus 100 adjusts the temperature of the cooling medium by, for example, adjusting the amount of heat exchange performed by the heat exchanger, which is disposed outside the second space S2. More specifically, in the case where the heat exchanger is an air-cooled heat exchanger, the food processing apparatus 100 may adjust the temperature of the cooling medium by adjusting the airflow rate of a fan that promotes air cooling in the heat exchanger, and in the case where the heat exchanger is a water-cooled heat exchanger, the food processing apparatus 100 may adjust the temperature of the cooling medium by adjusting the amount of water that is transported by a pump that promotes water cooling in the heat exchanger. The food processing apparatus 100 may adjust the amount of the cooling medium supplied to the second space by adjusting the amount of the cooling medium that is caused by the circulating pump to circulate between the second space S2, which is formed outside the reaction tank 1, and the heat exchanger. In this manner, the temperature of the cooling medium and/or the amount of the cooling medium to be supplied can be adjusted by using, for example, a circulator (not illustrated) including a heat exchanger, a circulating pump, and a pipe.

For example, in the case where the reaction of a reactant in the food processing apparatus 100 is fermentation of beer yeast, maturation at a low temperature (e.g., about 5°C) may be performed. In this case, a target preset temperature in the cooler 10 is 5°C.

In the food processing apparatus 100, the photocatalyst irradiated with light is brought into contact with the reactant that serves as a raw material of food so as to reform the reactant by the photocatalyst. For example, in the case of reforming a raw material of beer, the fermentation period can be shortened by decomposing the sugar in the wort beforehand.

According to the food processing apparatus 100 of the present embodiment, since the interiors of the reaction tubes 7 are filled with the dry gas 12, the humidity of the gas inside each of the reaction tubes 7 can be set to be lower than a predetermined humidity. Thus, occurrence of condensation on the inner surfaces of the reaction tubes as a result of the gas being cooled inside the reaction tubes can be suppressed, and the light sources can radiate an amount of light equal to or greater than a predetermined amount of light onto the photocatalyst. As a result, the food processing apparatus 100 can be stably operated, and a reactant that is used for food can be effectively reformed.

### (Modifications of First Embodiment)

### (First Modification)

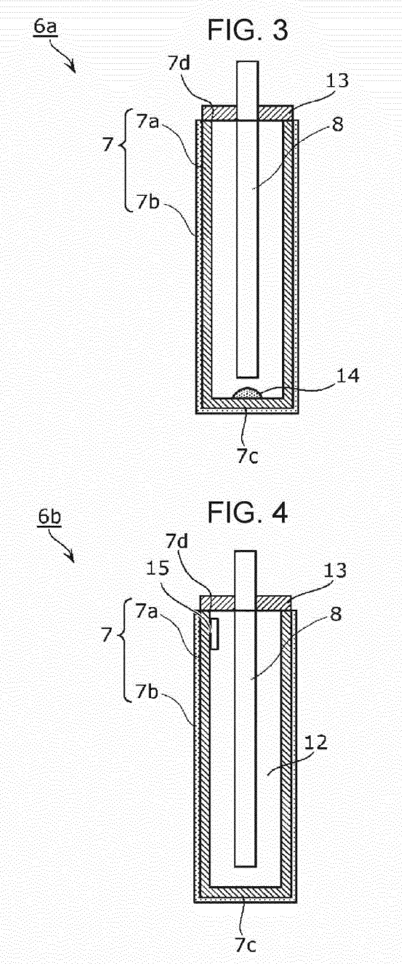

A first modification of the first embodiment will now be described with reference with Fig. 3. Fig. 3 is a diagram illustrating an example of the configuration of each of the catalytic reactors 6a according to the first modification of the first embodiment.

Each of the catalytic reactors 6a may have a configuration in which a desiccant 14 is disposed in the reaction tube 7. As a result, the interior of the reaction tube 7 is filled with a dry gas. The desiccant 14 may be made of, for example, silica gel.

In this manner, the catalytic reactors 6a may each have the desiccant 14 disposed in the corresponding reaction tube 7. This can reduce the probability of occurrence of condensation. Note that each of the reaction tubes 7 may be filled with the dry gas 12, and in addition, the desiccant 14 may be disposed in each of the reaction tubes 7.

In each of the catalytic reactors 6a, although the opening 7d of the reaction tube 7 is sealed with the sealer 13, there is a possibility that the outside air containing moisture may enter the interior of the reaction tube 7 through, for example, a very small gap and/or a gap that is formed due to deformation of a member. Even in the case where the outside air containing moisture enters, since the desiccant 14 is disposed in each of the reaction tubes 7, the probability of the occurrence of condensation can be reduced.

### (Second Modification)

A second modification of the first embodiment will now be described with reference with Fig. 4. Fig. 4 is a diagram illustrating an example of the configuration of each of the catalytic reactors 6a according to the second modification of the first embodiment.

Each of the catalytic reactors 6a according to the second modification has the configuration of each of the catalytic reactors 6 according to the first embodiment and further includes a color-changing member 15. The color-changing member 15 is a member that is disposed in the reaction tube 7 and whose color changes when it comes into contact with moisture. For example, the color-changing member 15 is disposed on the inner surface of the reaction tube 7. For example, the color-changing member 15 may be made of silica gel to which cobalt chloride is added or may be formed of a piece of cobalt chloride paper.

As a result, an operator who operates the food processing apparatus according to the second modification of the first embodiment can visually and suitably determine that moisture has entered the interiors of the reaction tubes 7. This enables the operator to, for example, take measures against occurrence of condensation, examples of the measures including replacing the reaction tube 7 that is in a condition that makes it difficult for light from the light source 8 to reach the photocatalyst with the reaction tube 7 in which no condensation has occurred. Therefore, even if condensation occurs on the inner surfaces of the reaction tubes 7, each of the light sources 8 can radiate an amount of light equal to or greater than the predetermined amount of light onto the photocatalyst.

### (Third Modification)

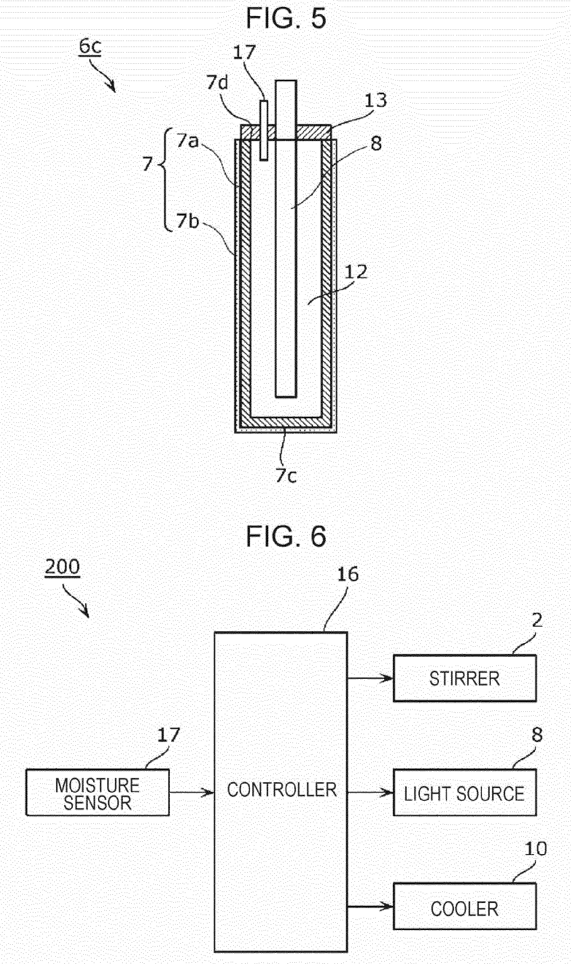

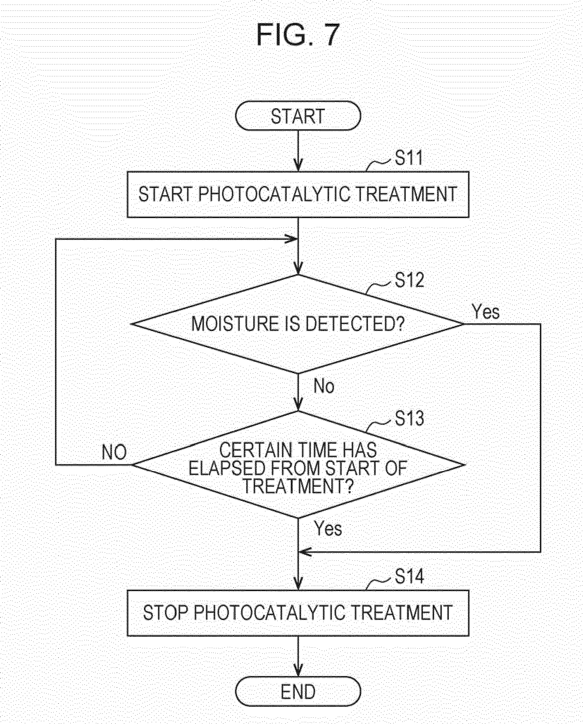

A third modification of the first embodiment will now be described with reference with Fig. 5 to Fig. 7. Fig. 5 is a diagram illustrating an example of the configuration of one of catalytic reactors 6c according to the third modification of the first embodiment. Fig. 6 is a functional block diagram of a food processing apparatus 200 according to the third modification of the first embodiment. Fig. 7 is a flowchart illustrating an example of an operation of the food processing apparatus 200 according to the third modification of the first embodiment.

As illustrated in Fig. 5, each of the catalytic reactors 6c according to the third modification has the configuration of each of the catalytic reactors 6 according to the first embodiment and further includes a moisture sensor 17. Each of the moisture sensors 17 is disposed in one of the reaction tubes 7 so as to detect moisture. More specifically, each of the moisture sensors 17 is provided at an end of a member that has a bar-like shape or a linear shape and that is fixed to the corresponding sealer 13 in such a manner as to extend through the sealer 13.

As illustrated in Fig. 6, the food processing apparatus 200 may include a controller 16. The controller 16 controls an operation of the food processing apparatus 200. The controller 16 receives detection results obtained by the moisture sensors 17 and controls at least one of the stirrer 2, the light sources 8, and the cooler 10 in accordance with the received detection results. For example, when one of the moisture sensors 17 detects moisture, that is, when one of the moisture sensors 17 detects that moisture has been formed in the corresponding reaction tube 7, the controller 16 may perform control for stopping light emission of the corresponding light source 8. In this case, the controller 16 may stop the operation of the stirrer 2 and the operation of the cooler 10. The controller 16 may be implemented by, for example, a processor and a memory that stores a program executed by the processor. The controller 16 may be implemented by, for example, a dedicated circuit.

Operation of the food processing apparatus 200 will now be described with reference to Fig. 7.

First, the controller 16 starts a photocatalytic treatment (S1 1). The photocatalytic treatment is similar to the treatment of the first embodiment, which has been described above, and thus, the description thereof will be omitted.

Next, the controller 16 determines whether moisture has been detected by the moisture sensors 17 (S12).

If the controller 16 determines that moisture has not been detected by the moisture sensors 17 (No in S12), the controller 16 determines whether a certain period of time has elapsed since the photocatalytic treatment has been started (S13). More specifically, the controller 16 starts counting when the photocatalytic treatment is started and determines whether the certain period of time has elapsed since the photocatalytic treatment has been started by determining whether the count is equal to the certain period of time. Note that the certain period of time is a light emission time set in the photocatalytic treatment and is stored in a memory (not illustrated) included in the controller 16.

If the controller 16 determines that moisture has been detected by the moisture sensors 17 (Yes in S12) or determines that the certain period of time has elapsed since the photocatalytic treatment has been started (Yes in S13), the controller 16 stops the photocatalytic treatment (S14). If the controller 16 determines that the certain period of time has not yet elapsed since the photocatalytic treatment has been started (No in S13), the process returns to step S12.

As a result, the food processing apparatus 200 can appropriately determine entry of moisture into each of the reaction tubes 7 as a physical quantity. Thus, the food processing apparatus 200 can take measures against the occurrence of condensation in the reaction tubes 7. As a specific example of the measures, the food processing apparatus 200 can perform control for stopping the photocatalytic treatment.

### (Fourth Modification)

The interior of each of the reaction tubes 7 may be decompressed in a state where the opening 7d of the reaction tube 7 is sealed with the sealer 13. The interiors of the reaction tubes 7 may be under vacuum. As a result, the occurrence of condensation on the inner surfaces of the reaction tubes 7 can be suppressed.

### (Second Embodiment)

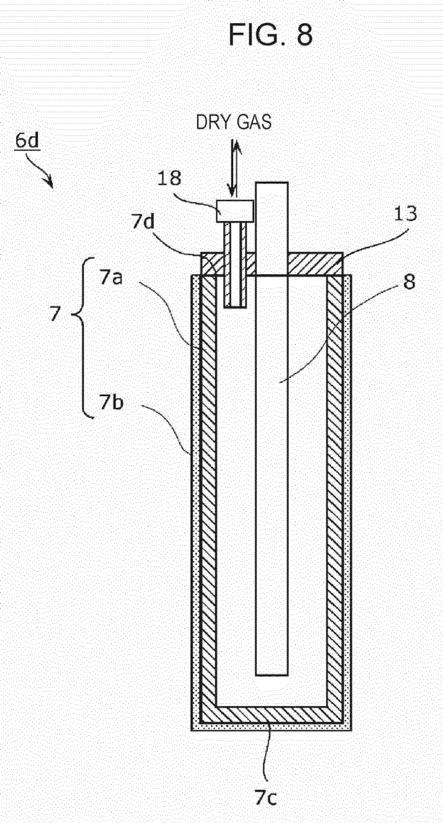

Catalytic reactors of a food processing apparatus according to a second embodiment will now be described with reference to Fig. 8. Fig. 8 is a diagram illustrating an example of the configuration of one of catalytic reactors 6d according to the second embodiment.

The difference between the food processing apparatus according to the second embodiment and the food processing apparatus 100 according to the first embodiment is the configuration of each of the catalytic reactors 6d, and the rest of the configuration of the food processing apparatus according to the second embodiment is the same as that of the food processing apparatus 100. Accordingly, the configuration of each of the catalytic reactors 6d will now be described.

Each of the catalytic reactors 6d has the configuration of each of the catalytic reactors 6 according to the first embodiment and further includes a pressure regulator 18. Each of the pressure regulators 18 adjusts the pressure inside the corresponding reaction tube 7 by introducing a gas into the reaction tube 7 or discharging a gas from the interior of the reaction tube 7. Each of the pressure regulators 18 is fixed to the corresponding sealer 13 in such a manner as to extend through the second end of the corresponding reaction tube 7, that is, the sealer 13. Each of the pressure regulators 18 is, for example, a pressure valve that externally regulates the pressure inside the corresponding reaction tube 7.

The gas inside each of the reaction tubes 7 expands due to the heat generated by the corresponding light source 8 when the light source 8 emits light, and the pressure inside the reaction tube 7 increases. Each of the pressure regulators 18 discharges the expanded gas from the interior of the corresponding reaction tube 7, so that the internal pressure of the reaction tube 7 can be suppressed from increasing to be higher than a predetermined pressure, and formation of a very small gap due to deformation of a member such as the sealer 13 can be suppressed. As a result, the probability of entry of the outside air into the reaction tubes 7 can be reduced.

Note that the food processing apparatus according to the second embodiment operates in the same manner as the food processing apparatus 100 according to the first embodiment, and thus, the description of the operation of the food processing apparatus according to the second embodiment will be omitted.

### (Third Embodiment)

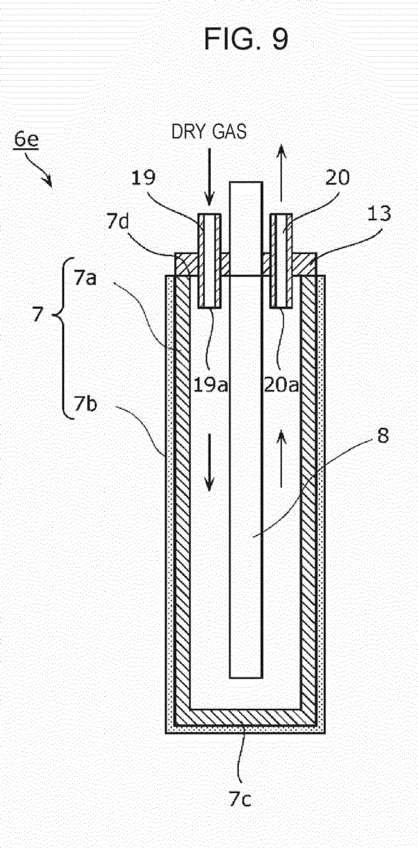

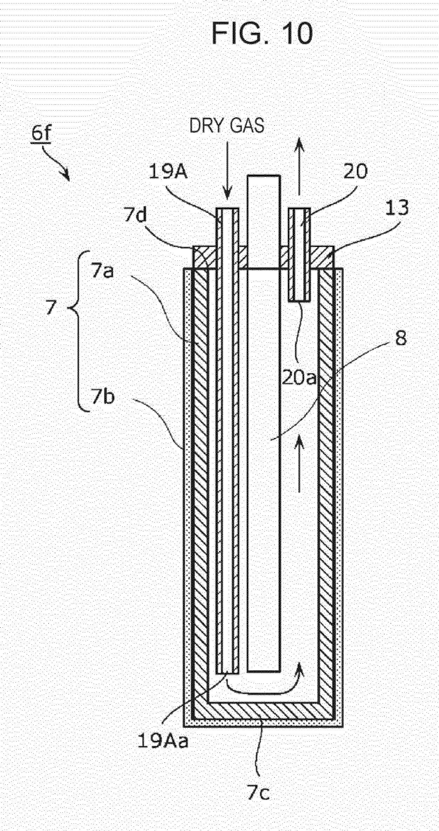

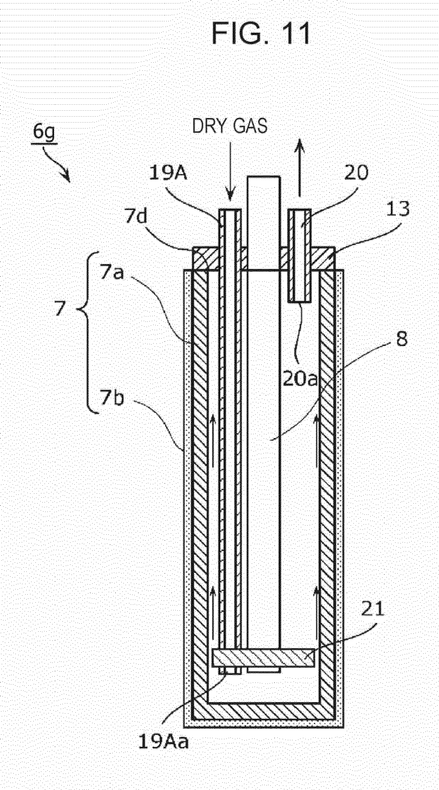

Catalytic reactors of a food processing apparatus according to a third embodiment will now be described with reference with Fig. 9 to Fig. 11. Fig. 9 is a diagram illustrating a first example of the configuration of a catalytic reactor 6e according to the third embodiment. Fig. 10 is a diagram illustrating a second example of the configuration of a catalytic reactor 6f according to the third embodiment. Fig. 11 is a diagram illustrating a third example of the configuration of a catalytic reactor 6g according to the third embodiment. Note that, in Fig. 9 to Fig. 11, flows of a gas inside the reaction tubes 7 are indicated by arrows.

The differences between the food processing apparatus according to the third embodiment and the food processing apparatus 100 according to the first embodiment are the configurations of the catalytic reactors 6e, 6f, 6g, and the rest of the configuration of the food processing apparatus according to the third embodiment is the same as that of the food processing apparatus 100. Accordingly, the configurations of the catalytic reactors 6e, 6f, 6g will now be described.

First, the configuration of the catalytic reactor 6e, which is the first example, will be described with reference to Fig. 9.

The catalytic reactor 6e has the configuration of each of the catalytic reactors 6 according to the first embodiment and further includes an introduction tube 19 and a discharge tube 20. The introduction tube 19 is a tubular member that allows a dry gas to be introduced into the reaction tube 7. The discharge tube 20 is a tubular member that allows the dry gas, which has been introduced into the reaction tube 7 through the introduction tube 19, to be discharged outside the reaction tube 7. The introduction tube 19 is disposed at a position closer to the second end (the opening 7d) of the reaction tube 7 than a first end (the bottom surface 7c) of the reaction tube 7 and has an introduction port 19a through which the dry gas is introduced into the reaction tube 7. The discharge tube 20 is disposed at a position closer to the second end (the opening 7d) of the reaction tube 7 than the first end (the bottom surface 7c) of the reaction tube 7 and has a discharge port 20a through which the gas inside the reaction tube 7 is discharged. In other words, the introduction port 19a and the discharge port 20a are formed in the vicinity of the opening 7d of the reaction tube 7.

The introduction tube 19 and the discharge tube 20 are fixed to the sealer 13 in such a manner as to extend through the sealer 13. The introduction tube 19 and the discharge tube 20 are arranged at different positions on the sealer 13, and for example, the introduction tube 19 is located on the side opposite to the side on which the discharge tube 20 is located with the light source 8 interposed between the introduction tube 19 and the discharge tube 20.

According to the above configuration, the dry gas is introduced into the reaction tube 7 through the introduction tube 19, and the gas inside the reaction tube 7 is discharged through the discharge tube 20, so that the gas inside the reaction tube 7 can be replaced with the dry gas. Thus, the state in which the interior of the reaction tube 7 is filled with the dry gas can be effectively maintained.

Next, the configuration of the catalytic reactor 6f, which is the second example, will be described with reference to Fig. 10.

The catalytic reactor 6f includes an introduction tube 19A instead of the introduction tube 19 of the catalytic reactor 6e, which is the first example. The difference between the introduction tube 19A and the introduction tube 19 is that the tube length of the introduction tube 19A is longer than that of the introduction tube 19. The introduction tube 19A is disposed at a position closer to the first end (the bottom surface 7c) of the reaction tube 7 than the second end (the opening 7d) of the reaction tube 7 and has an introduction port 19Aa through which a dry gas is introduced into the reaction tube 7. In other words, the introduction port 19Aa is formed in the vicinity of the bottom surface 7c of the reaction tube 7.

Consequently, the dry gas can be introduced into the reaction tube 7 from the vicinity of the first end (the bottom surface 7c) of the reaction tube 7, and the gas inside the reaction tube 7 can be discharged from the vicinity of the second end (the opening 7d). Thus, in the reaction tube 7, a flow of the dry gas from the bottom surface 7c toward the opening 7d can be generated, and the interior of the reaction tube 7 can be entirely filled with the dry gas.

Next, the configuration of the catalytic reactor 6g, which is the third example, will be described with reference to Fig. 11.

The catalytic reactor 6g has the configuration of the catalytic reactor 6f, which is the second example, and further includes a rectifier 21. The introduction tube 19A extends through the rectifier 21, and the rectifier 21 is a member that is disposed in the vicinity of the introduction port 19Aa of the introduction tube 19A in such a manner that a gap is formed between the rectifier 21 and the inner surface of the reaction tube 7. For example, the rectifier 21 is a member having a plate-like shape and is, for example, a member having a circular plate-like shape. The light source 8 may extend through the rectifier 21. When the reaction tube 7 is viewed from above, the rectifier 21 may be positioned in such a manner that a gap is formed between the whole outer peripheral edge of the rectifier 21 and the inner surface of the reaction tube 7.

Thus, the dry gas introduced through the introduction port 19Aa of the introduction tube 19A is rectified by the rectifier 21 so as to flow in the vicinity of the inner surface of the reaction tube 7. Therefore, the occurrence of condensation on the inner surface of the reaction tube 7 can be effectively suppressed.

Note that a gap does not need to be formed between the whole outer peripheral edge of the rectifier 21 and the inner surface of the reaction tube 7, and a gap may at least be formed between a portion of the outer peripheral edge of the rectifier 21 and a portion of the inner surface of the reaction tube 7. In other words, a portion of the rectifier 21 and the inner surface of the reaction tube 7 may be in contact with each other.

Note that the food processing apparatus according to the third embodiment operates in the same manner as the food processing apparatus 100 according to the first embodiment, and thus, the description of the operation of the food processing apparatus according to the third embodiment will be omitted.

Although food processing apparatuses according to one or more aspects of the present disclosure have been described above on the basis of the embodiments, the present disclosure is not limited to the embodiments. The scope of the one or more aspects of the present disclosure may include embodiments obtained by making various modifications conceivable by those skilled in the art to the above-described embodiments and embodiments obtained by combining some of the components of the above-described embodiments as long as the obtained embodiments are within the scope of the present disclosure.

### Industrial Applicability

An aspect of the present disclosure is applicable to, for example, a food processing apparatus using a photocatalyst that reforms a raw material of food.

### Reference Signs List

- 1: reaction tank
- 2: stirrer
- 3: rotary shaft
- 4: stirring member
- 5: lid
- 6, 6a to 6g: catalytic reactor
- 7: reaction tube
- 7a: glass base member
- 7b: thin film
- 7c: bottom surface
- 7d: opening
- 8: light source
- 10: cooler
- 11: reaction-tank temperature sensor
- 12: dry gas
- 13: sealer
- 14: desiccant
- 15: color-changing member
- 16: controller
- 17: moisture sensor
- 18: pressure regulator
- 19, 19A: introduction tube
- 20: discharge tube
- 21: rectifier
- 100, 200: food processing apparatus

## Claims

1. A food processing apparatus comprising:
a reaction tank that has an internal space for storing a reactant, the reactant being in a liquid state and being to be used for food;
a cooler that cools the reactant, which is stored in the reaction tank; and
a catalytic reactor that is disposed in the internal space,
wherein the catalytic reactor includes a reaction tube and a light source disposed in an interior of the reaction tube,
wherein an outer surface of the reaction tube is provided with a photocatalyst,
wherein the reaction tube allows light radiated from the light source to pass through the reaction tube,
wherein the reaction tube has a first end, and the first end is closed in such a manner as to serve as a bottom surface of the reaction tube, and
wherein the interior of the reaction tube is filled with a dry gas.

2. The food processing apparatus according to claim 1,
wherein the reaction tube has a second end sealed with a sealer, and the second end faces the first end.

3. The food processing apparatus according to claim 1 or 2,
wherein the catalytic reactor further includes a color-changing member that is disposed in the interior of the reaction tube and whose color changes when the color-changing member comes into contact with moisture.

4. The food processing apparatus according to any one of claims 1 to 3,
wherein the catalytic reactor further includes a moisture sensor that is disposed in the interior of the reaction tube and that detects moisture.

5. The food processing apparatus according to claim 4, further comprising:
a controller that stops light emission of the light source when moisture is detected by the moisture sensor.

6. The food processing apparatus according to claim 1,
wherein the catalytic reactor further includes a pressure regulator that is disposed at the second end and that adjusts a pressure inside the reaction tube by introducing a gas into the interior of the reaction tube or discharging a gas from the interior of the reaction tube, and the second end faces the first end.

7. The food processing apparatus according to claim 1,
wherein the catalytic reactor further includes
an introduction tube that allows a dry gas to be introduced into the reaction tube, and
a discharge tube that allows the dry gas, which has been introduced into the reaction tube through the introduction tube, to be discharged outside the reaction tube.

8. The food processing apparatus according to claim 7,
wherein a distance between the introduction tube and the first end is shorter than a distance between the introduction tube and the second end,
wherein the introduction tube has an introduction port through which the dry gas is introduced into the reaction tube,
wherein a distance between the discharge tube and the second end is shorter than a distance between the discharge tube and the first end, and
wherein the discharge tube has a discharge port through which a gas inside the reaction tube is discharged.

9. The food processing apparatus according to claim 8,
wherein the catalytic reactor further includes a rectifier that is disposed near the introduction port of the introduction tube such that a gap is formed between the rectifier and an inner surface of the reaction tube, the introduction tube extending through the rectifier.

10. The food processing apparatus according to any one of claims 1 to 9,
wherein the light source includes at least one of a fluorescent lamp that emits an ultraviolet ray and a light emitting diode (LED) that emits an ultraviolet ray.
